# EUROPÄISCHE PATENTSCHRIFT

(11) **EP 2 552 680 B1**
(45) Veröffentlichungstag und Bekanntmachung des Hinweises auf die Patenterteilung: **01.03.2017**
(21) Anmeldenummer: 11712531.0
(22) Anmeldetag: 30.03.2011
(51) Int. Cl.: B29C 70/44, B29C 33/02, B29C 35/02, F03D 1/06, B29L 31/08

(54) **ROTORBLATTFORM ZUM HERSTELLEN EINES ROTORBLATTES EINER WINDENERGIEANLAGE UND VERFAHREN ZUR HERSTELLUNG DES SELBEN**
ROTOR BLADE FORM FOR PRODUCING A ROTOR BLADE OF A WIND POWER PLANT AND METHOD FOR PRODUCING SAME
MOULE DE PALE DE ROTOR POUR LA FABRICATION D'UNE PALE DE ROTOR D'UNE ÉOLIENNE ET PROCÉDÉ DE FABRICATION DE CETTE PALE DE ROTOR

(30) Priorität: 30.03.2010 DE 102010013405
(43) Veröffentlichungstag der Anmeldung: 06.02.2013
(73) Patentinhaber: Wobben Properties GmbH, 26607 Aurich (DE)
(72) Erfinder: HARMS, Stephan, 26529 Upgant-Schott (DE); KOLBE, Uwe, 26629 Timmel (DE); OVERLANDER, Torsten, 26835 Hesel-Beningafehn (DE)
(74) Vertreter: Eisenführ Speiser
(86) Internationale Anmeldenummer: PCT/EP2011/054958
(87) Internationale Veröffentlichungsnummer: WO 2011/124516

(56) Entgegenhaltungen:
- EP-A1- 0 770 463
- EP-A2- 0 038 922
- WO-A1-2009/007077
- GB-A- 2 172 542
- US-A- 4 855 011

## Beschreibung

Die vorliegende Erfindung betrifft eine Rotorblattform zum Herstellen eines Rotorblattes einer Windenergieanlage sowie ein Verfahren zum Herstellen eines Rotorblattes einer Windenergieanlage.

Rotorblätter moderner Windenergieanlagen erreichen Größen von 60 m Länge, 5 m Breite und 2 m Dicke und können gegebenenfalls auch noch größer ausfallen. Um eine hohe Stabilität bei geringem Gewicht zu erreichen, wird ein solches Rotorblatt häufig aus einem faserverstärkten Kunststoff, insbesondere glasfaserverstärktem Kunststoff (GFK) hergestellt. Dies beinhaltet, dass Komponenten aus anderen Materialien in dem Rotorblatt umfasst sein können, wie beispielsweise eine Hinterkante aus Metall oder Verstärkungsmaterialien in dem Rotorblatt aus Holz. Der überwiegende Teil des Rotorblattes, insbesondere die formgebende Schale oder Teilschale wird aber aus faserverstärktem Kunststoff hergestellt. Hierzu wird wenigstens eine Rotorblattform verwendet, die im Grunde eine Negativform der herzustellenden Rotorblattoberfläche bildet. Dabei kann das Rotorblatt beispielsweise aus zwei Halbschalen zusammengesetzt werden, wobei die Halbschalen jeweils zuvor in einer eigenen Rotorblattform hergestellt werden. Je nach Größe des herzustellenden Rotorblattes können auch mehr als zwei Formen vorgesehen sein.

Zum Herstellen des Rotorblattes bzw. Rotorblattabschnittes werden beispielsweise in Harz getränkte Fasergewirke, insbesondere Gewebe, in die Form eingelegt, um dann auszuhärten und eine Oberfläche gemäß der Rotorblattform anzunehmen. Zum Be-Beschleunigen und/oder gleichmäßigen Gestalten des Aushärtens wird die Rotorblattform beheizt. Hierbei soll eine gleichmäßige oder gegebenenfalls bei Bedarf örtlich gezielte Erwärmung zum Aushärten vorgenommen werden.

Dazu weisen bekannte Rotorblattformen zum Herstellen eines Rotorblattes einer Windenergieanlage oder eines Teils davon ein Rohrleitungssystem auf, durch das warmes bzw. heißes Wasser zum Wärmen geleitet wird. Die Wärme breitet sich von diesem so beheizten Rohrleitungssystem über den Körper der Rotorblattform zu Ihrer Oberfläche zu dem auszuhärtenden Material hin aus.

Ein solches Heizsystem ist recht aufwändig bei der Herstellung der damit versehenen Rotorblattform und aufwändig in der Anwendung, da neben dem Erhitzen des Wassers auch für eine Zirkulation desselben gesorgt werden muss. Zudem ist ein solches System verhältnismäßig träge.

Ferner kann beim Aushärten von Harz das Problem einer Exothermie auftreten. Hierbei gibt das Harz beim Aushärten Wärme an die Umgebung ab, was zu einer unerwünschten und unkontrollierten Erhitzung, gegebenenfalls zu einer Überhitzung führen kann. Mitunter kann diesem Phänomen durch Unterbrechen der Zufuhr weiteren heißen Wassers nur unzureichend begegnet werden.

Aus der internationalen Anmeldung WO 2009/007077 A1, die eine Rottorblattform gemäß dem Oberbegriff des Anspruchs 1 und ein Verfahren gemäß dem Oberbegriff des Anspruchs 9 offenbart, ist eine integral beheizbare Form zum Formen von thermoplastischen Verbundwerkstoffen bekannt, die auch zum Herstellen verhältnismäßig großer Komponenten wie Windturbinenblättern oder dergleichen geeignet ist. Die europäische Patentanmeldung EP 0 038 922 A2 offenbart eine Anordnung zur Beheizung großflächiger Laminatformkörper. Hiermit ist eine Heißhärtung von Laminaten vorgesehen, wobei eine Heizmatte aus Kohlenstofffasergewebe vorgesehen ist, die zwischen zwei Glasfasergewebematten einlaminiert ist und zusammen mit einer oder mehreren Lagen einer Isolationsschicht zu einer Heizschale geformt ist, die mit der Formschale durch Vakuum oder durch Verklebung verbunden wird.

Aufgabe der vorliegenden Erfindung ist es somit, eine Rotorblattform zum Herstellen eines Rotorblattes einer Windenergieanlage oder eines Teils davon bzw. ein entsprechendes Verfahren so zu verbessern, dass zumindest eines der oben genannten Probleme behoben oder verringert wird. Insbesondere soll eine Lösung zum Verbessern des Heizens beim Herstellen eines Rotorblattes einer Windenergieanlage gefunden werden. Zumindest soll eine alternative Lösung vorgeschlagen werden.

Erfindungsgemäß wird eine Rotorblattform zum Herstellen eines Rotorblattes oder eines Teils davon gemäß Anspruch 1 vorgeschlagen.

Demnach weist die Rotorblattform einen beheizbaren Formabschnitt mit einer formgebenden Oberfläche zum Formen der Rotorblattoberfläche auf. Auf diese formgebende Oberfläche, die üblicherweise konkav ausgebildet ist, werden bestimmungsgemäß in Harz getränkte Fasergewirke wie Glasfasergewirke oder dergleichen zum Herstellen der Rotorblattoberfläche gelegt.

Der beheizbare Formabschnitt weist wenigstens zwei Heizelemente mit jeweils wenigstens einem elektrischen Widerstandsheizelement auf. Zu jedem Heizabschnitt ist eine eigene Versorgungseinheit zum Versorgen des jeweiligen Widerstandsheizelementes mit elektrischem Strom zum Heizen vorgesehen. Durch die Verwendung elektrischer Widerstandsheizelemente soll ermöglicht werden, die Heizleistung insbesondere dynamischer einzubringen. Elektrische Widerstandsheizelemente können gegenüber einem Rohrleitungssystem platzsparender ausgebildet sein. Dadurch ist es zum einen möglich, die direkte Heizquelle jeweils näher an die formgebende Oberfläche zu bringen oder sogar unmittelbar an der formgebenden Oberfläche anzuordnen. Zudem kann ein Aufbau der Rotorblattform platzsparender und/oder vom Gewicht her leichter ausgestaltet werden. Durch die Verwendung mehrerer Heizzonen ist eine lokal zielgerichtete Einbringung von Wärme möglich. So können beispielsweise Bereiche speziell beheizt werden. Dies kann beispielsweise sinnvoll sein für ein Gurtfeld, das einen mit einem Gurt versehenen Bereich des Rotorblattes speziell beheizt, oder es kann ein Kantenfeld speziell beheizt werden. Darüber hinaus kann es sein, dass unterschiedliche Bereiche der Rotorblattform und/oder des Rotorblattes unterschiedlich stark Wärme abgeben, weil sie beispielsweise unterschiedlich thermisch gegen die Umgebung gedämmt sind. Um gleichwohl eine gleichmäßige oder gleichmäßigere Temperaturverteilung zu erreichen, kann es vorteilhaft sein, solche schlechter gedämmten Bereiche mit mehr Heizleistung pro Fläche zu versorgen. Bei Verwendung von mehr als zwei Heizabschnitten können ausgewählte Bereiche auch durch mehr als einen Heizabschnitt abgedeckt sein und es können unterschiedliche Heizabschnitte hinsichtlich einer gemeinsamen Aufgabe zeitweise gruppiert werden. Außerdem können sich Heizbereiche überlappen.

Das Vorsehen separater Versorgungseinheiten ermöglicht eine voneinander unabhängige Beheizung der Heizabschnitte. Anschaulich ausgedrückt beeinflusst das Zu- oder Abschalten eines Heizabschnittes nicht die Zuführung von Heizleistung eines anderen Heizabschnittes. Mit anderen Worten wird durch das Vorsehen getrennter Versorgungseinheiten hinsichtlich des Heizens eine Entkopplung der Heizabschnitte erreicht.

Eine vollständige thermische Entkopplung örtlich benachbarter Bereiche kann hierdurch nicht unbedingt erreicht werden, aber eine Berücksichtigung solcher Einflüsse kann sich mitunter vereinfachen.

Durch die Verwendung separater Versorgungseinheiten für einzelne Heizabschnitte, ist es zudem möglich, Standardelemente zu verwenden. Jedenfalls dann, wenn jeder Heizabschnitt im Grunde ähnlich viel Heizleistung aufnehmen kann bzw. benötigt, kann für jeden Heizabschnitt eine gleiche, insbesondere baugleiche, Versorgungseinheit verwendet werden. Es bräuchte somit nur eine einzige Versorgungseinheit entwickelt zu werden und je nach vorhandenen Heizabschnitten wird eine entsprechende Anzahl Versorgungseinheiten eingesetzt. Hierdurch ist es zudem möglich, auch für unterschiedlich große Rotorblattformen nur eine einzige Versorgungseinheit zu entwickeln. In diesem Fall könnte der erhöhte Heizbedarf einer größeren Rotorblattform gegenüber einer kleineren auf einfache Weise durch Vorsehen entsprechend vieler Heizabschnitte und/oder entsprechend vieler Versorgungseinheiten erreicht werden.

Jede Versorgungseinheit umfasst eine Steuereinheit zum Steuern des elektrischen Stroms zum Heizen des jeweiligen Widerstandsheizelementes, vorzugsweise einen Transformator oder Stromsteller zum Bereitstellen des Stroms zum Heizen. Unter einem Stromsteller ist hier eine Einheit zu verstehen, die mittels Halbleiterschaltern den gewünschten Strom bereitstellt, wie z.B. ein Wechselrichter, gesteuerter Gleichrichter, Hoch- oder Tiefsetzsteller. Die Ausgangsspannung eines solchen Transformators oder Stromstellers - und damit die Eingangsspannung des betreffenden Widerstandsheizelementes - kann bspw. bis zu 40 V betragen.

Durch die Steuereinheit kann der Strom zum Heizen des betreffenden Heizabschnittes bzw. Widerstandsheizelementes gezielt gesteuert werden. Im einfachsten Fall betrifft das ein Ein- oder Ausschalten einer Stromzufuhr. Ebenso kann - gemäß einer weiteren Ausführungsform - die Amplitude des Stroms gesteuert werden.

Durch einen Transformator kann die Spannung zum Versorgen des jeweiligen Widerstandsheizelementes eingestellt und an dieses angepasst werden. Dabei kann der Transformator unterschiedliche Spannungsabgriffe bereitstellen, um dadurch unterschiedliche Spannungen und im Ergebnis unterschiedliche Ströme und Heizleistungen bereitzustellen. Gemäß einer Variante steuert die Steuereinheit entsprechende Transformatorabgriffe an, um dadurch die Heizleistung zu regulieren. Grundsätzlich ist eine Regulierung der Leistungszufuhr auch durch ein Pulsen der Stromzufuhr möglich. Die Steuereinheit und/oder der Transformator wird auf das zu versorgende elektrische Widerstandsheizelement bzw. die zu versorgenden elektrischen Widerstandsheizelemente abgestimmt. Insbesondere der Transformator ist entsprechend dimensioniert. Gemäß einer Ausführungsform ist jeweils ein Transformator mit unterschiedlichen Spannungsabgriffen vorgesehen, von denen aber nur einer angeschlossen ist. Vorzugsweise sind die Transformatoren der Rotorblattform für jede der Versorgungseinheiten identisch, aber je nach zu beheizendem Widerstandsheizelement unterschiedlich angeschlossen, insbesondere an unterschiedlichen Spannungsabgriffen.

Vorzugsweise weist jede Versorgungseinheit einen Schaltschrank mit Steuereinheit und Transformator auf, soweit vorhanden. Grundsätzlich können Teile dieser Einheiten auch aus dem Schaltschrank herausragen, insbesondere etwaige Kühlbleche. Vorzugsweise ist aber die Versorgungseinheit durch den Schaltschrank als kompakte Einheit ausgebildet. Diese ist entsprechend an gewünschter Position der Rotorblattform positionierbar. Hierzu sei wiederholt, dass ein modernes Rotorblatt und damit eine Rotorblattform für eine Windenergieanlage eine Länge von 60 m aufweisen kann. Für Niederspannungskreise, also die Sekundärseite eines etwaigen Transformators, sind daher kurze Anschlussleitungen vorteilhaft. Entsprechend kann jede Versorgungseinheit möglichst nah an dem jeweils zu versorgenden Heizabschnitt positioniert werden.

Vorzugsweise ist eine Rotorblattform dadurch gekennzeichnet, dass die Steuereinheit oder ein Teil davon, optional auch ein Stromsteller, an einem abnehmbaren Außenwandabschnitt des Schaltschranks montiert ist, der auch vereinfacht als abnehmbare Gehäusewand bezeichnet werden kann, und dass elektrische Verbindungen zu diesem Außenwandabschnitt als lösbare Verbindungen vorgesehen sind, um ein Austauschen dieses Außenwandabschnitt einschließlich der darauf montierten Elemente gegen einen anderen Außenwandabschnitt zu vereinfachen. Trotz sorgfältigster Herstellung einer Versorgungseinheit, insbesondere eines entsprechenden Schaltschranks, können Fehler in der Elektronik, insbesondere der Steuereinheit auftreten oder es können später Fehler auftreten. Diese Fehler können Probleme in der Software als auch in der Hardware betreffen. Gemäß dieser Ausgestaltung kann eine Steuereinheit auf einfache Weise getauscht werden, indem einfach die Gehäusewand mit der defekten Steuereinheit gegen eine andere Gehäusewand mit gleicher aber nicht defekter Steuereinheit getauscht wird. Entsprechendes gilt für einen Stromsteller. Hierdurch ist es möglich, einem Fehler während der Produktion schnellstmöglich zu begegnen und das Produzieren eines Ausschussteils, also den Ausschuss eines Rotorblatts oder eines Teils davon, zu verhindern. Aufgrund des verhältnismäßig langen Herstellungsprozesses, insbesondere Aushärtungsprozesses eines Rotorblattes einer Windenergieanlage kann es ausreichend sein, eine Steuereinheit im Rahmen einiger Minuten zu tauschen. Je nach Fertigungsfortschritt können auch längere Zeitabschnitte akzeptabel sein.

Es lässt sich eine solche einfache Austauschmöglichkeit auch erreichen, wenn die Steuerung bzw. der Stromsteller statt an einer kompletten Gehäusewand, an einem Teil davon oder einem anderen leicht zugänglichen, tragenden Abschnitts des Schaltschranks montiert ist.

Eine weitere Ausführungsform schlägt vor, dass die Rotorblattform gekennzeichnet ist durch eine Zentralsteuerung zum Ausgeben von Sollwerten und/oder Schaltbefehlen an jede der Versorgungseinheiten bzw. die Steuereinheit jeder Versorgungseinheit, wobei eine Datenverbindung zwischen der Zentralsteuerung und jeder Versorgungseinheit und/oder zwischen den Versorgungseinheiten untereinander vorgesehen ist.

Durch die Zentralsteuerung kann der gesamte Heizbedarf für die gesamte Rotorblattform koordiniert werden. Hierdurch kann eine koordinierte und möglichst gleichmäßige Beheizung der Rotorblattform erreicht werden, insbesondere um den gesamten mit der Rotorblattform herzustellenden Rotorblattabschnitt zu beheizen. So können beispielsweise über die Zentralsteuereinheit Temperatursollwerte für jeden Heizabschnitt vorgegeben und an die betreffende Versorgungseinheit übermittelt werden. Jede Versorgungseinheit kann dann entsprechend die Heizleistung individuell steuern. Die Daten können über eine Datenverbindung zwischen der Zentralsteuerung und jeder Versorgungseinheit und/oder zwischen den Versorgungseinheiten untereinander übertragen werden. Mit anderen Worten kann eine sternförmige Topologie oder eine ringförmige Topologie vorgesehen sein. Bei einer ringförmigen Topologie können beispielsweise sämtliche Sollwerte für alle Heizabschnitte ausgehend von der Zentralsteuerung von einer Versorgungseinheit zur nächsten übertragen werden, wobei jede Versorgungseinheit den für Sie relevanten Sollwert einem entsprechenden Datenpaket entnimmt. Die Datenverbindung kann dabei kabelgebunden als auch per Funk vorgesehen sein.

Durch das Übertragen von Schaltbefehlen von der Zentraleinheit an die Versorgungseinheiten, was zusätzlich oder alternativ erfolgen kann, erfolgt auch eine Steuerung, insbesondere Regelung zentral in der Zentralsteuerung. Die Zentralsteuerung kann damit die Beheizung der gesamten Rotorblattform zentral steuern und auf einander abstimmen. Das konkrete Bereitstellen des elektrischen Stromes zum Beheizen der Rotorblattform wird jedoch durch die jeweiligen Versorgungseinheiten vorgenommen. Ist-Werte, insbesondere Temperatur-Ist-Werte der Heizabschnitte, werden an die Zentralsteuereinheit geleitet. Das kann über die jeweiligen Versorgungseinheiten erfolgen. Eine Umsetzung analoger Temperaturmesswerte in digitale Werte zum Übertragen und/oder Verarbeiten in der Zentralsteuereinheit erfolgt oftmals schon durch den jeweiligen Temperaturmessfühler.

In der Zentralsteuereinheit kann zudem ein Datenlogger vorgesehen sein, der Messdaten des jeweiligen Herstellungsverfahrens aufzeichnet und nicht zu manipulieren ist.

Vorzugsweise ist das wenigstens eine Widerstandsheizelement als flächiges Heizelement ausgebildet und kann somit entsprechend zielgerecht Flächen beheizen. Zusätzlich oder optional ist das Heizelement aus Kohlenstofffasern oder Kohlenstofffilamenten ausgebildet bzw. weist solche Fasern auf. Solche Kohlenstofffasern können im Sinne eines elektrischen Widerstandes elektrischen Strom leiten und sich dabei erhitzen. Eine solche Ausgestaltung ist besonders für den Fall vorteilhaft, wenn die Rotorblattform im Bereich ihrer formgebenden Oberfläche im Wesentlichen aus kohlefaserverstärktem Kunststoff ausgebildet ist. In diesem Fall weisen nämlich die Rotorblattform in diesem Bereich und das ebenfalls in diesem Bereich anzuordnende Heizelement ähnliche mechanische Eigenschaften auf, wie Festigkeit oder auch temperaturabhängige Eigenschaften, wie durch einen Dehn-Koeffizienten bestimmte Eigenschaften. Dabei muss eine Rotorblattform aus kohlefaserverstärktem Kunststoff nicht notwendigerweise auch ein Heizelement aus Kohlenstofffasern aufweisen.

Eine Rotorblattform einer weiteren Ausführungsform ist gekennzeichnet durch einen Tragabschnitt, insbesondere einen Gitterträger oder Gitterbinder, zum Tragen des beheizbaren Formabschnitts, und eine an dem Tragabschnitt angeordnete, die Versorgungseinheiten verbindende Stromschiene zum Versorgen der Versorgungseinheiten bzw. der Transformatoren mit elektrischem Strom und/oder Daten. Ein solcher Tragabschnitt, insbesondere Gitterträger oder Gitterbinder, trägt im Grunde den Abschnitt der Rotorblattform, der die formgebende Oberfläche aufweist.

Gemäß einer Aufbauvariante ist eine beheizbare, formgebende Schicht bspw. aus kohlenstofffaserverstärktem Kunststoff (CFK) vorhanden, an die sich eine elektrisch isolierende Schicht anschließt, gefolgt von einer thermisch isolierenden Schicht, die wabenförmig aufgebaut sein kann. An die thermisch isolierende Schicht schließt sich bspw. eine weitere, stabilisierende CFK-Schicht zur an. Diese Sandwich-Struktur, von der formgebenden Schicht bis zur weiteren stabilisierenden Schicht, kann zusammen eine Dicke im Bereich einiger cm, z.B. etwa 5 cm aufweisen. Diese Sandwich-Struktur wird schließlich von dem Tragabschnitt getragen.

Der Tragabschnitt kann insbesondere über die gesamte Länge des herzustellenden Rotorblattes bzw. Teils davon vorgesehen und zum Aufstellen auf einem Hallenboden einer Werkshalle ausgebildet sein. Vorzugsweise ist er als Gitterkonstruktion ausgebildet und kann eine Höhe von beispielsweise 1 bis 2 m annehmen. Auf einer solchen Gitterkonstruktion ist im Grunde eine an die herzustellende Rotorblattform angepasste Schicht angeordnet, insbesondere in der Art der oben beschriebenen Sandwich-Struktur, Diese in der Form angepasste Schicht ist alleine nicht über die gesamte Rotorblattlänge tragfähig und wird daher auf besagten Tragabschnitt, insbesondere dem Gitterträger oder Gitterbinder, getragen und gehalten.

Dieser Tragabschnitt, insbesondere Gitterträger oder Gitterbinder, ist gemäß dieser Ausführungsform zudem mit einer Stromschiene bestückt. Diese Stromschiene wird zum Versorgen der Versorgungseinheiten, und/oder der Transformatoren bzw. Stromrichter verwendet. Vorzugsweise bilden diese Transformatoren bzw. Stromrichter einen Teil der Versorgungseinheit und jede Versorgungseinheit kann an ihrem Ort, nämlich in der Nähe des ihr zugeordneten Heizabschnittes mit der Stromschiene verbunden werden. Optional oder alternativ erfüllt die Stromschiene die Aufgabe, jeder Versorgungseinheit Daten zuzuführen. Vorzugsweise weist eine solche Stromschiene eine elektrische Versorgungsleitung, auch als Energiebus bezeichnet, zum Übertragen elektrischer Energie und eine Datenleitung, auch als Datenbus bezeichnet, zum Übertragen von Daten auf. Der Datenbus kann auch gesondert vorgesehen sein. Auf diese Art und Weise kann der Tragabschnitt, insbesondere der Gitterträger oder Gitterbinder, beim Aufbau der Rotorblattform mit einer Stromschiene bestückt sein, an die dann an den gewünschten Stellen die Versorgungseinheiten angeschlossen und befestigt werden. Hierdurch wird ermöglicht, selbst den Aufbau einer 60 m langen Rotorblattform zumindest teilweise modular zu gestalten. Eine ansonsten sehr individuell ausgebildete Rotorblattform mit vielen unterschiedlichen individuellen Bereichen kann hierdurch mit einer Vielzahl standardisierter Elemente ausgerüstet werden, so dass weniger unterschiedliche Elemente benötigt werden und selbst die Schritte zum Ausrüsten sind zum Teil standardisierbar.

Vorzugsweise weist jeder Heizbereich wenigstens einen Temperatursensor auf und der Temperatursensor ist zum Übertragen gemessener Temperaturmesswerte mit der betreffenden Versorgungseinheit verbunden und die Versorgungseinheit ist zum Auswerten der jeweiligen Messwerte vorbereitet. Ein solcher Temperaturmesssensor liefert somit insbesondere elektrische und/oder digitalisierte Werte an die Versorgungseinheit, die entsprechend weiter übertragen und/oder ausgewertet werden. Hierdurch kann die Heizleistung gesteuert werden und beispielsweise ein von einer Zentralsteuereinheit vorgegebener Temperatursollwert ausgeregelt werden. Zum Auswerten ist die oder eine Steuereinheit vorgesehen, die thermische Messwerte zwischenspeichern und in einen Steueralgorithmus einfließen lassen kann. Dabei können ein oder mehrere Temperatursensoren wie bspw. ein Pt100 vorgesehen sein, wobei die Temperatursensoren unterschiedlich ausgewertet werden können. So wird vorgeschlagen, die Ergebnisse eines oder mehrerer Temperatursensoren zur generellen Steuerung der Heizelemente und damit zur Zuführung des Stroms zu verwenden, wohingegen ein weiterer Temperaturfühler bzw. Temperatursensor ausschließlich zum Begrenzen vorgesehen ist. D. h. ein solcher zur Begrenzung vorgesehener Temperaturfühler liefert seine Werte im Wesentlichen nur an eine Sicherheitseinheit, die das Einhalten eines maximalen Temperaturwertes überwacht. Ein solcher Temperaturfühler kann auch als Temperaturbegrenzer bezeichnet werden. Gemäß einer Ausführungsform ist der Temperaturbegrenzer so ausgeführt, dass er unmittelbar eine Schalthandlung ausführt wie z.B. ein Bimetallschalter.

Günstig ist es, wenn Strom und/oder Spannung des Widerstandsheizelementes gemessen werden. Hierdurch kann ebenfalls, bei bekanntem Temperaturverhalten des Widerstandsheizelementes, seine Temperatur bestimmt werden. Bspw. kann eine solche Temperaturbestimmung auch als Redundanzmessung zu einer Temperaturmessung mit einem Temperaturfühler verwendet werden.

Vorzugsweise wird für jeden Heizabschnitt von einer Zentralsteuerung ein Stromsollwert und/oder ein Schaltbefehl an die betreffende Versorgungseinheit zum Steuern eines Stromes mittels eines bzw. des Transformators bzw. Stromstellers zum Beheizen des wenigstens einen Widerstandsheizelementes. Hierdurch konzentriert sich die Steuerung und Auswertung in der zentralen Steuereinheit. Das vermeidet das Vorsehen vieler komplexer Mikroprozessoren in den einzelnen Versorgungseinheiten. Sicherheitsschaltungen, wie ein Überhitzungsschutz, der durch einen Temperaturbegrenzer realisiert wird, können an jeder Versorgungseinrichtung vorgesehen sein.

Die Messwerte der Temperaturfühler können aber auch zu mehr als nur zum direkten Vergleich eingesetzt werden. Vielmehr kann die Steuereinheit dazu vorbereitet sein, auch komplexere Auswertungen und/oder komplexere Steuerverfahren zu implementieren. Vorzugsweise weist eine solche Steuereinheit, in der Zentralsteuereinheit oder der Versorgungseinheit zum Auswerten einen Mikroprozessor und/oder eine zentrale Prozessoreinheit (CPU) auf.

Gemäß einer Variante ist, insbesondere für das Herstellen eines Teilabschnitts eines Rotorblatts, eine Rotorblattform mit nur einem Heizbereich und nur einer Versorgungseinheit vorgesehen.

Erfindungsgemäß wird zudem ein Verfahren zum Herstellen eines Rotorblattes einer Windenergieanlage oder eines Teils davon gemäß Anspruch 9 vorgeschlagen. Demnach wird ein aushärtbares Material in die Rotorblattform auf eine formgebende Oberfläche eines beheizbaren Formabschnittes der Rotorblattform eingegeben. Bei dem aushärtbaren Material wird insbesondere ein Faserverbundwerkstoff, wie glasfaserverstärkter Kunststoff oder kohlefaserverstärkter Kunststoff verwendet. Das Eingeben des aushärtbaren Materials betrifft dabei insbesondere das Einlegen harzgetränkter Gewirke, insbesondere Gewebe, wobei gegebenenfalls zusätzlich Harz vor, während und/oder nach dem Einlegen der harzgetränkten Gewirke erfolgen kann.

Im nächsten Schritt wird der die formgebende Oberfläche aufweisende Formabschnitt beheizt, damit das aushärtbare Material aushärtet.

Das Beheizen erfolgt dabei unter Verwendung eines wenigstens zwei Heizabschnitte aufweisenden Formabschnittes. Jeder Heizabschnitt wird mittels wenigstens eines an oder unterhalb der formgebenden Oberfläche angeordneten elektrischen Widerstandsheizelementes beheizt. Hierdurch kann eine möglichst flächige Beheizung in der Nähe des aushärtbaren Materials gezielt vorgenommen werden. Jeder Heizabschnitt wird dabei mittels einer dem jeweiligen Heizabschnitt zugeordneten Versorgungseinheit mit elektrischem Strom versorgt.

Vorzugsweise wird hier eine erfindungsgemäße Rotorblattform verwendet.

Weiter vorzugsweise wird für jeden Heizabschnitt von einer bzw. der Zentralsteuerung ein Temperatursollwert vorgegeben und an jede Versorgungseinheit des jeweiligen Heizabschnittes übertragen. Jede Versorgungseinheit steuert für sich den ihr zugeordneten Heizabschnitt, um den betreffenden Temperatursollwert auszuregeln, also durch eine Steuerung bzw. Regelung einzustellen. Insbesondere führt jede Versorgungseinheit bzw. dort die betreffende Steuerung einen Soll-/Istwertvergleich zwischen gemessener und vorgegebener Temperatur aus und gibt das Ergebnis dieses Soll-/Istwertvergleiches, also den Regelfehler, auf ein entsprechendes Regelwerk zum Erzeugen einer Stellgröße zum Steuern der jeweiligen Heizleistung.

Eine Ausführungsform führt die Steuerung, insbesondere einen Soll-/Istwertvergleich für jeden Heizbereich in der Zentralsteuereinheit durch und überträgt nur Schaltsignale an die jeweiligen Versorgungseinrichtungen.

Unabhängig davon, wo die Steuerung bzw. Regelung durchgeführt wird, liegen, insbesondere für jeden Heizbereich einzeln, vorgegebene, zeitabhängige Temperaturverläufe vor. Diese bilden die Grundlage der beschriebenen Steuerung des Beheizens und können bspw. durch Vorversuche ermittelt werden. Ein Anpassen während dem Herstellen eines Rotorblattes ist möglich. Ggf. wird manuell in die Steuerung eingegriffen, falls dies erforderlich erscheint.

Gemäß einer bevorzugten Ausführungsform nimmt die Versorgungseinheit Temperaturmesswerte an wenigstens einer Stelle in dem betreffenden Heizabschnitt auf und unterbricht und/oder reduziert abhängig von einem Temperaturverlauf das Zuführen von Heizleistung. Insbesondere wird im Falle eines zu starken Temperaturanstieges das Versorgen mit Strom zum Heizen unterbrochen oder zumindest reduziert. D. h., dass nicht nur ein absoluter Temperaturwert jeweils berücksichtigt wird, um das Heizen zu steuern, sondern dass vielmehr der Temperaturverlauf insbesondere ein Temperaturanstieg, berücksichtigt wird. Es ist zu beachten, dass ein thermisches Verhalten üblicherweise nicht schwingt. Das bedeutet, dass eine Temperaturregelung üblicherweise als reine P-Regelung ausgebildet sein kann. Oftmals ist ein sogenannter Zweipunktregeler ausreichend, nämlich ein Regler, der Heizleistung zuführt solange die gewünschte Temperatur nicht erreicht ist und die Heizleistung in dem Moment abschaltet, in dem die gewünschte Temperatur erreicht ist.

Durch die erfindungsgemäße Lösung kann auch auf einen exothermen Vorgang, der bspw. beim Aushärten von Harzen auftreten kann, gut reagiert werden, weil ein schnelles Erkennen eines Temperaturanstiegs jedes einzelnen Heizbereichs und ein schnelles Abschalten jedes einzelnen Heizbereichs ermöglicht wird.

Vorzugsweise erfolgt ein Reduzieren oder Abschalten des Beheizens erst dann, wenn der gemessene Temperaturwert den berechneten Temperaturwert um einen vorbestimmten Mindestwert überschreitet, der auch temperaturabhängig sein kann. Hierdurch wird zum einen eine Messungenauigkeit als auch eine Berechnungsungenauigkeit berücksichtigt, aber auch ein sogenannter Ping-Pong Effekt vermieden.

Gemäß einer weiteren Ausführungsform weist die Rotorblattform, insbesondere der Gitterbinder eine Verbindungsvorrichtung, insbesondere eine Steckverbindungsvorrichtung zum Verbinden mit einer Gegenverbindungsvorrichtung, insbesondere einer Gegensteckverbindungsvorrichtung zum Herstellen einer elektrischen Energieverbindung zum Übertragen elektrischer Energie, einer Datenübertragungsverbindung zum Übertragen von Daten, einer Druckluftverbindung zum Versorgen der Formheizung mit Druckluft und/oder einer Vakuumübertragungsverbindung zum Bereitstellen eines Vakuums an wenigstens einem Abschnitt der Rotorblattform. Vorzugsweise weist die Verbindungsvorrichtung gleichzeitig wenigstens einen Verbinder bzw. Steckverbinder zum Übertragen von Energie, einen Verbinder bzw. Steckverbinder zum Übertragen von Daten, einen Verbinder bzw. Steckverbinder zum Versorgen mit Druckluft und einen Verbinder bzw. Steckverbinder zum Bereitstellen eines Vakuums auf. Die Rotorblattform ist vorzugsweise mobil ausgebildet, und durch die Verbindungsvorrichtung kann somit auf einfache Weise eine Ankopplung der gesamten Formheizung an ein entsprechendes Versorgungssystem für Energie, Druckluft und Vakuum hergestellt werden. Gleichzeitig kann damit auch ein vorteilhafter Datenaustausch bewerkstelligt werden.

Nachfolgend wird die vorliegende Erfindung exemplarisch anhand einiger begleitender Figuren beispielhaft erläutert.
- Figur 1: zeigt schematisch eine erfindungsgemäße Rotorblattform für eine Rotorblatthalbschale in einer Draufsicht mit hervorgehobenen Heizbereichen und schematisch dargestellten Versorgungseinheiten.
- Figur 2: zeigt mehrere zusammengesetzte, erfindungsgemäße Rotorblattformen in einer perspektivischen Ansicht für ein anderes Rotorblatt als die Rotorblattform der Figur 1.
- Figur 3: zeigt eine als Gitterbinder bezeichnete Tragkonstruktion einer der Rotorblattformen der Figur 2 in einer perspektivischen Ansicht.
- Figur 4: zeigt einen Gitterbinder mit einer erfindungsgemäßen Versorgungseinheit.
- Figur 5: zeigt zwei erfindungsgemäße Gitterbinder in einer Draufsicht.
- Figur 6: zeigt die Gitterbinder der Figur 5 in einer perspektivischen Ansicht.
- Figur 7: zeigt eine Steckverbindungsvorrichtung in einer Seitenansicht.
- Figur 8: zeigt eine Gegensteckverbindungsvorrichtung, die an die Steckverbindungsvorrichtung der Figur 7 angepasst ist, in einer Seitenansicht.
- Figur 9: zeigt die Gegensteckverbindungsvorrichtung der Figur 8 in einer Draufsicht.

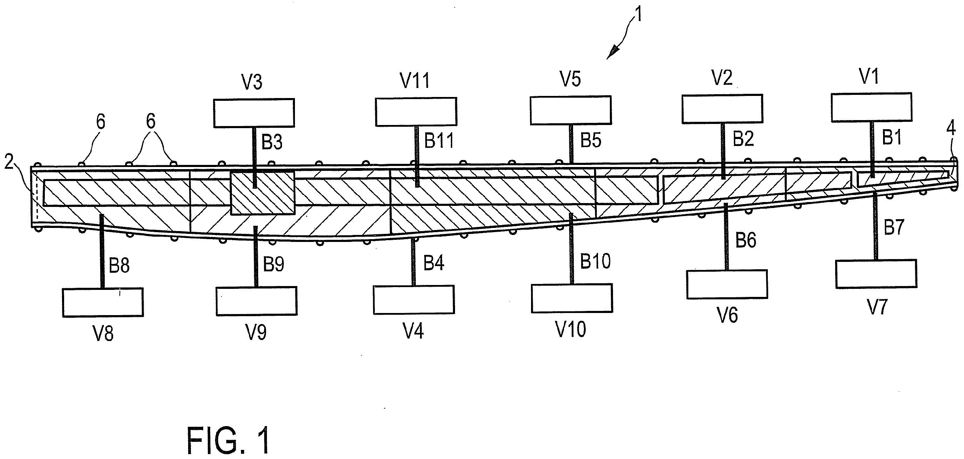

Die Rotorblattform 1 der Figur 1 ist vorgesehen zum Herstellen einer Rotorblatthalbschale. Zwei Rotorblatthalbschalen können dann zu einem kompletten Rotorblatt zusammengesetzt werden, nachdem jede Halbschale für sich ausgehärtet ist. Die Rotorblattform 1 umfasst 11 Heizbereiche B1 bis B11 mit 11 Versorgungseinheiten V1 bis V11. Die Rotorblattform 1 weist entsprechend dem zu fertigenden Rotorblatt einen Wurzelbereich 2 und einen Spitzenbereich 4 auf, in denen entsprechend ein Wurzelbereich des Rotorblattes bzw. die Spitze des Rotorblattes gefertigt wird. Der Figur 1 sind zudem Verstärkungsstege 6 an jeweils ihren Enden zu erkennen. Die Figur 1 zeigt eine Ansicht auf die offene Rotorblattform 1 und damit im Wesentlichen auf eine formbildende Oberfläche der Rotorblattform 1.

Die Rotorblattform 1 ist der Länge nach, nämlich vom Wurzelbereich 2 zum Spitzenbereich 4 in die fünf Hauptheizbereiche B8, B9, B10, B6 und B7 aufgeteilt. Durch diese Hauptheizbereiche ist insbesondere eine gleichmäßige Beheizung der kompletten Rotorblattform 1 zu erreichen, um die entsprechende Rotorblatthalbschale vollständig und gleichmäßig zum Aushärten zu beheizen.

Weiterhin sind etwa entlang einer Längsachse der Rotorblattform drei als Gurtfelder zu bezeichnende Heizbereiche B1, B2 und B11 vorgesehen. Die Gurtfelder B1, B2 und B11 sind den Hauptflächen B6 bis B10 teilweise überlagert. Die Gurtfelder B1, B2 und B11 sind im Wesentlichen in einem Bereich angeordnet, in dem in das zu fertigende Rotorblatt ein spezieller festigender Gurt oder Gurtbereich eingearbeitet wird. Um speziell diesen Bereich zu beheizen, um eine Stabilität durch besagtes eingelegtes Gurtband zu verbessern, können diese Gurtfelder unabhängig beheizt werden. Dies kann aber auch zugleich mit einem oder mehreren der Hauptheizbereiche 6 bis 10 erfolgen.

Weiterhin sind zwei Heizbereiche als sogenannte Kantenfelder B4 und B5 vorgesehen Diese Kantenfelder B4 und B5 beheizen speziell die Kantenbereiche des herzustellenden Rotorblattes. Hierdurch kann den besonderen Anforderungen an die Rotorblattkanten der Halbschale berücksichtigt werden. Hierbei ist zu beachten, dass eine in der Rotorblattform 1 hergestellte Rotorblatthalbschale später noch insbesondere im Bereich ihrer Kanten mit einer weiteren korrespondierenden Rotorblatthalbschale zusammengesetzt wird. Beim Zusammensetzen dieser Rotorblatthalbschalen werden diese miteinander verklebt und auch dabei können diese Kantenfelder - und korrespondierende Kantenfelder der Rotorblattform der anderen Rotorblatthalbschale - beheizt werden.

Schließlich ist ein weiterer Heizbereich als Kantenzusatzfeld B3 vorgesehen. Dieses Kantenzusatzfeld B3 berücksichtigt einen besonders sorgfältig zu behandelnden Bereich des herzustellenden Rotorblattes. Das Kantenzusatzfeld B3 ist zumindest teilweise mit dem Hauptheizbereich B9 und dem Gurtfeld B11 überlagert.

Sämtliche Versorgungseinheiten V1 bis V11 versorgen und steuern jeweils individuell den jeweils ihnen zugeordneten Heizbereich B1 bis B11. Vorgabewerte, insbesondere Schaltbefehle, werden jedoch von einer Zentralsteuereinheit, die in Figur 1 nicht veranschaulicht ist, zugeführt. Somit erfolgt die individuelle Steuerung jedes Heizbereiches individuell aber basierend auf dem extern vorgegebenen Schaltwerten. Alternativ kann wenigstens einen Sollwert, insbesondere einer Solltemperatur an die Versorgungseinheit übertragen werden. Für die Steuerung wird für jeden Heizbereich und damit jede Versorgungseinheit V1 bis V11 wenigstens eine gemessene Temperaturwert ausgewertet, der jeweils mithilfe mehrerer Messsensoren aufgenommen worden sein kann. Die Übertragung der gemessenen Temperaturwerte erfolgt vorzugsweise mit Hilfe der Versorgungseinheiten und eines Datenbusses. Der so erfasste Istwert wird jeweils mit dem vorgegebenen Sollwert verglichen und eine entsprechende Stellgröße, insbesondere Schaltbefehl ausgegeben. Die Versorgung des jeweiligen Heizbereiches B1 bis B11 mit elektrischem Strom zum Heizen - Heizstrom genannt - wird durch wenigstens jeweils einen der Versorgungseinheit V1 bis V11 zugeordneten Transformator vorgenommen. Die Transformatoren in der Versorgungseinheiten V1 bis V11 werden über eine Stromschiene mit elektrischer Energie versorgt.

Entsprechend erhält jede der Versorgungseinheiten V1 bis V11 von außen lediglich generell elektrische Energie, z. B. durch einen Netzanschluss von 235 V bzw. 400 V, und Schaltbefehle. Zusätzlich kann jede Versorgungseinheit V1 bis V11 ihrerseits Werte, insbesondere auch Messwerte an eine Zentralsteuereinheit zurückgeben. Dadurch wird es möglich, das Beheizen der Rotorblattform 1 zentral an einer Steuereinheit vorzugeben und zu überwachen. Insbesondere kann ein Heizprozess, sei es der Gesamtheizprozess oder Teilheizprozesse, an besagter Zentralsteuereinheit auch manuell gestartet werden. Über ein gemeinsames Display sind beispielsweise sämtliche Temperaturwerte sämtlicher Heizbereiche überwachbar. Vorzugsweise wird hierfür ein gemeinsames Display vorgesehen sein, das relevante Werte in einer Übersicht darstellt. Vorzugsweise ist ein solches Display mit einer Eingabeeinheit versehen bzw. als sogenannter Touch-Screen ausgebildet und es können gezielt Daten zentral abgerufen und Befehle manuell eingegeben werden, während die Versorgungseinheiten V1 bis V11 ansonsten individuell arbeiten.

Es ist zudem vorteilhaft, wenn ein solches zentrales Display, und damit die zentrale Steuereinheit insgesamt, bei Verwendung mehrerer zum Herstellen eines Rotorblattes benötigten Rotorblattformen die Heizbereiche sämtlicher dieser Rotorblattformen gemeinsam darstellt.

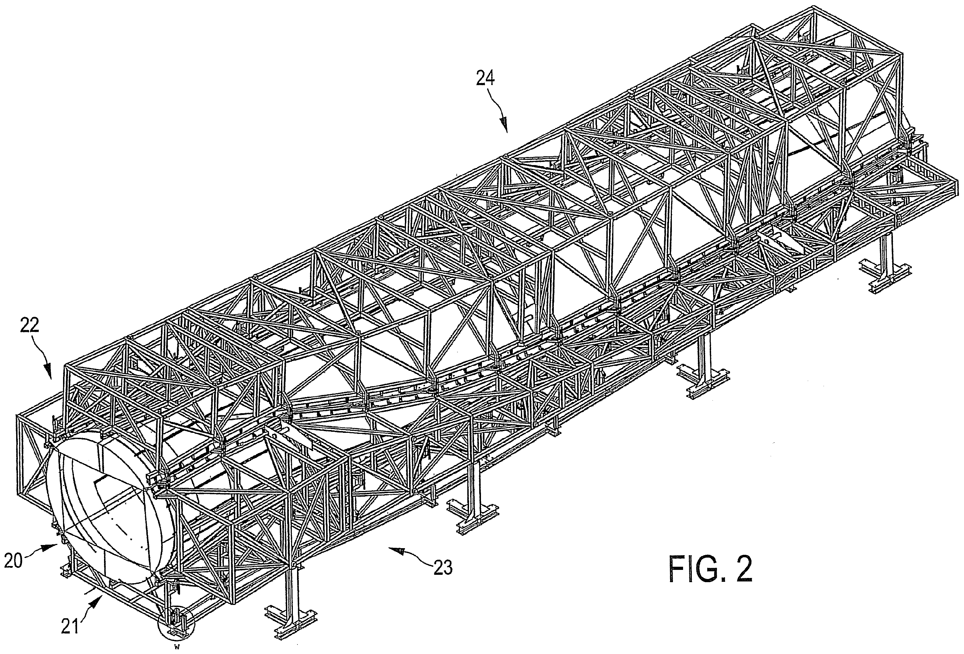

Figur 2 zeigt vier unterschiedliche Rotorblattformen für einen wurzelseitigen Abschnitt eines mehrteiligen Rotorblattes einer Windenergieanlage. Etwa links in der Figur 2 ist der Wurzelbereich 20 dargestellt, der zum Anschluss an eine Rotorblattnabe etwa rund ausgebildet ist. Die vier Rotorblattformen sind eine Rotorblattdruckseitenform 21, eine Rotorblattnasenkantenform 22, eine Rotorblattendkantenform 23 und eine Rotorblattsaugseitenform 24. Die Darstellung der Figur 2 zeigt die vier Rotorblattformen 21 bis 24 in einem zusammengesetzten Zustand zum Verbinden der Teilbereiche des Rotorblattes.

Einzelne Heizbereiche sind in der Darstellung nicht zu erkennen, da sie in die jeweilige Rotorblattform 21 bis 24 eingearbeitet sind. Vielmehr ist in der Figur 2 im Wesentlichen die Tragkonstruktion, die auch als Gitterbinder bezeichnet wird, jeder Rotorblattform zu erkennen. Die Gitterbinder weisen im Wesentlichen eine gerüstartige Ausbildung auf und können somit kostengünstig und mit geringem Gewicht ausgebildet werden. Jeder Gitterbinder nimmt einen Rotorblattformabschnitt auf, der eine formgebende Oberfläche aufweist und in den Heizelemente eingearbeitet sind.

Die jeweilig notwendigen Versorgungseinheiten für die Heizbereiche jeder Rotorblattform 21 bis 24 sind in der Figur 2 zur besseren Übersichtlichkeit nicht dargestellt.

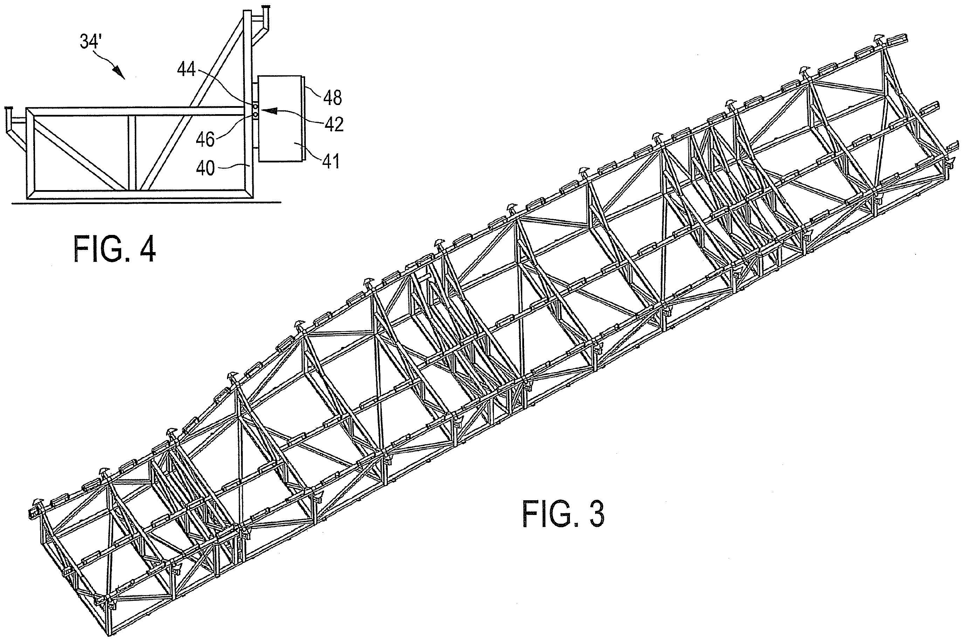

Figur 3 zeigt einen Gitterbinder 34 zur Rotorblattform 24 gemäß Figur 2. Ein Rotorblattformabschnitt ist zur besseren Übersichtlichkeit in der Figur 3 nicht dargestellt. Auch die Figur 3 zeigt keine Versorgungseinheiten.

Figur 4 veranschaulicht einen Teil eines Gitterbinders 34'in einer Seitenansicht. Neben Konstruktionselementen des Gitterbinders 34' ist an einer senkrechten Strebe 40 eine Stromschiene 42 angeordnet. Ebenfalls an der senkrechten Strebe ist eine Versorgungseinheit 41 befestigt und an die Stromschiene 42 angeschlossen.

Die Stromschiene 42 weist einen Energiebus 44 zum Bereitstellen elektrischer Energie auf und versorgt darüber auch die Versorgungseinheit 41 mit elektrischer Energie. Weiterhin weist die Stromschiene 42 einen Datenbus 46 auf, über den Informationen übertragen werden. Auch die Versorgungseinheit 41 ist an diesen Datenbus 46 angeschlossen, um Daten von einer Zentralsteuereinheit zu empfangen und dorthin zu übertragen. Der Energiebus und der Datenbus können auch getrennt vorgesehen sein.

Zudem weist die Versorgungseinheit 41 eine Frontabdeckung 48 auf. An der Frontabdeckung 48 ist zum Innenraum der Versorgungseinheit 41 die Steuerung angeordnet. Im Falle einer Störung der Steuerung in der Versorgungseinheit 41' oder wenn ein solcher Verdacht besteht, kann die Abdeckung 48 einschließlich darin angeordneter Steuereinheit gegen eine weitere Austauschfrontabdeckung 48 mit Steuereinheit getauscht werden. Hierzu brauchen lediglich ein paar Steckverbindungen zwischen der Steuereinheit an der Frontabdeckung 48 und Anschlüssen in der Versorgungseinheit 41 gelöst zu werden.

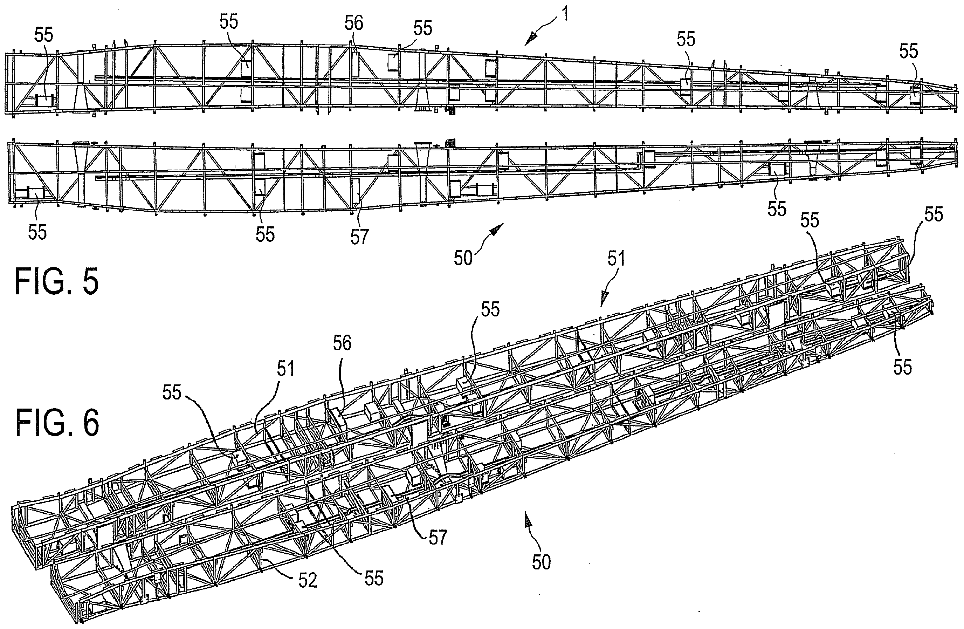

Die Figuren 5 und 6 zeigen zwei Gitterbinder 50, 51 zweier Rotorblattformen zum Herstellen jeweils einer Rotorblatthalbschale. Die Gitterbinder 50, 51, weisen jeweils im Wesentlichen eine Gitterkonstruktion 52, 53 auf, um darauf jeweils eine formgebende Schicht zu tragen, in der Heizelemente eingelassen sind. Diese formgebende Schicht kann mit weiteren Schichten in einer Sandwich-Struktur verbunden sein. Diese formgebende Schicht ist zur besseren Übersicht in den Figuren 5 und 6 nicht dargestellt, so dass die Gestalt jedes Gitterbinders 50, 51 und damit der Gitterkonstruktionen 52, 53 besser zu erkennen ist. Zum Versorgen der Heizelemente mit elektrischem Strom zum Beheizen sind für jede Rotorblattform mehrere Versorgungseinheiten 55 vorgesehen. Die Versorgungseinheiten können im Detail voneinander abweichen. Es werden dennoch - zur Verbesserung der Übersichtlichkeit - gleiche Bezugszeichen für die Versorgungseinheiten verwendet. Jede Versorgungseinheit 55 versorgt jeweils einen Heizbereich mit elektrischem Strom und steuert dabei den jeweils zuzuführenden Strom entsprechend. Weiterhin ist jeweils eine Zentralsteuerung 56, 57 vorgesehen, um die betreffenden Versorgungseinheiten 55 mit Schaltbefehlen zu versorgen. An der Zentralsteuereinheit 56, 57 wird die gesamte Steuerung der jeweiligen Rotorblattform koordiniert und Prozesse und Zustände, insbesondere Temperaturen können dargestellt werden. Über die Zentralsteuereinheit kann auch ein manuelles Eingreifen vorgenommen werden.

Die Versorgungseinheiten 55 werden über Stromschienen mit elektrischer Energie versorgt. Weiterhin dienen die Stromschienen zur Datenübertragung zwischen den Versorgungseinheiten 55 und den Zentralsteuereinheiten 56, 57. Es kann ein separater Energiebus und ein separater Datenbus vorgesehen sein. Die Versorgungseinheiten 55 und Zentralsteuereinheiten 56, 57 sind innerhalb der Gitterkonstruktionen 52, 53 angeordnet. Hierdurch wird eine Verfahrbarkeit der Gitterbinder 50, 51 und damit der Rotorblattformen einschließlich Zentralsteuereinheit 56, 57 und Versorgungseinheiten 55 ermöglicht. Die Rotorblattform kann damit den Einsatzort z.B. für unterschiedliche Fertigungsschritte verlegen, wobei die gesamte Apparatur und Steuerung zum Heizen mit verfahren werden kann.

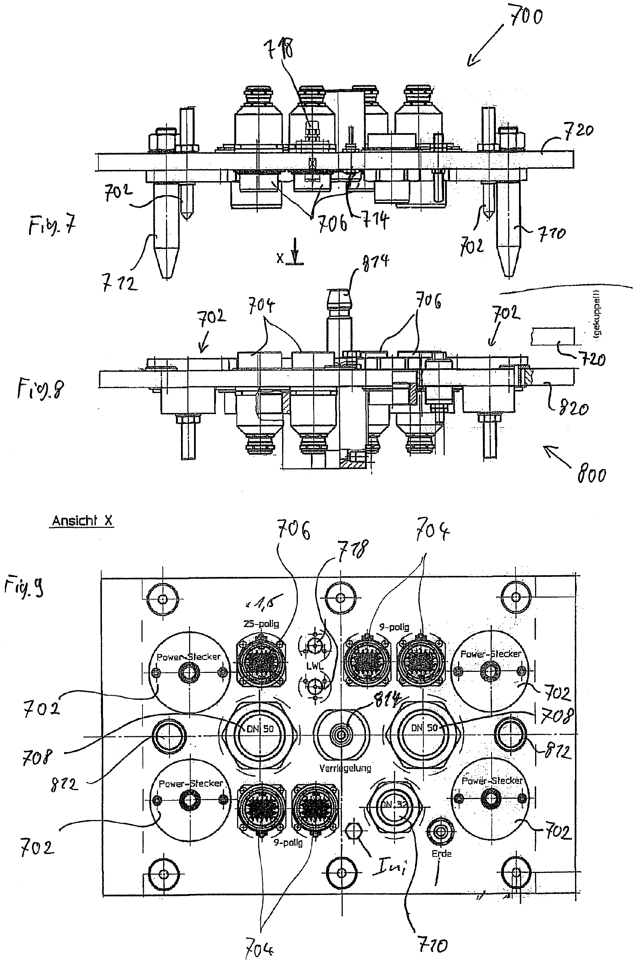

Figur 7 zeigt eine Steckverbindungsvorrichtung 700, und die Figuren 8 und 9 eine dazu korrespondierende Gegensteckverbindungsvorrichtung 800, im Sinne von Stecker und Steckdose. Die jeweiligen Versorgungsanschlüsse werden nachfolgend für Steckverbindungsvorrichtung 700 und Gegensteckverbindungsvorrichtung 800 mit gleichen Bezugszeichen versehen, um die Übersichtlichkeit zu verbessern. Dem Fachmann ist klar, dass trotzdem das jeweilige Element der Steckverbindungsvorrichtung 700 und der Gegensteckverbindungsvorrichtung 800 nicht identisch sind. Die Steckverbindungsvorrichtung 700 und die Gegensteckverbindungsvorrichtung 800 bilden eine bevorzugte als Verbindungsvorrichtung 700 bzw. Gegenverbindungsvorrichtung 800.

Die Draufsicht der Figur 9 zeigt vier Energieanschlüsse 702 zur Übertragung elektrischer Energie, vier jeweils neunpolige erste Datenanschlüsse 704 zum Herstellen eines Netzwerks bzw. zum Ankoppeln an ein Netzwerk, einen 25-poligen zweiten Datenanschluss 706, zum steuerungstechnischen Anschließen der Rotorblattform, nämlich zum Durchführen eines sogenannten Handshake von Signalen verwendeter Steuerungen, zwei Vakuumanschlüsse 708 und einen Druckluftanschluss 710. Zum Erleichtern eines korrekten Verbindens der Verbindungsvorrichtung 700 mit der Gegenverbindungsvorrichtung 800 weist die Verbindungsvorrichtung 700 zwei Führungsstifte 712 auf, zu denen korrespondierende Führungsaufnahmen 812 in der Gegenverbindungsvorrichtung 800 vorgesehen sind. Hierdurch kann zudem auch eine falsche Verbindung der einzelnen Anschlüsse vermieden werden.

Weiterhin ist ein Verriegelungsstift 814 vorgesehen, um die Verbindungsvorrichtung 700 und die Gegenverbindungsvorrichtung 800 in einem verbundenen und gekoppelten Zustand zu halten. Zum Erkennen eines verbundenen Zustandes der beiden Vorrichtungen 700 und 800 ist ein Kontaktgeber 716 vorgesehen. Als weitere Möglichkeit für einen Signal- bzw. Datenaustausch sind zwei Lichtwellenleiteranschlüsse 718 vorgesehen. Die jeweiligen Anschlüsse sind fest an einer Verbindungstragplatte 720 bzw. Gegenverbindungstragplatte 820 befestigt. In der Figur 8 ist zudem ein Abschnitt der Verbindungstragplatte 720 dargestellt, der die Verbindungstragplatte 720 in einer Position andeutet, in der die Verbindungsvorrichtung 700 mit der Gegenverbindungsvorrichtung 800 verbunden ist.

Mit Hilfe der Verbindungsvorrichtung 700, die an der Rotorblattform vorzusehen ist, kann somit auf einfache und effiziente Weise ein Verbinden mit der Gegenverbindungsvorrichtung 800 vorgenommen werden, wodurch eine Versorgung der Rotorblattform mit elektrischer Energie, Daten, Druckluft und Vakuum auf einfache Weise möglich ist. Bei dem Datenaustausch sind zudem verschiedene Systeme vorgesehen, nämlich mehrere neunpolige Datenanschlüsse 704, ein 25-poliger Datenanschluss 706 und Lichtwellenleiteranschlüsse 718. Hierdurch kann auch die Mobilität der Rotorblattform, die in einer Werkshalle vorzugsweise beweglich angeordnet ist, erhöht werden.

## Patentansprüche

1. Rotorblattform (1) zum Herstellen eines Rotorblatts einer Windenergieanlage oder eines Teils davon mit einem beheizbaren Formabschnitt mit einer formgebenden Oberfläche zum Formen der Rotorblattoberfläche und
wobei der beheizbare Formabschnitt wenigstens zwei Heizabschnitte aufweist und jeder Heizabschnitt umfasst wenigstens ein an oder unterhalb der formgebenden Oberfläche angeordnetes elektrisches Widerstandsheizelement und eine Versorgungseinheit (41) zum Versorgen des wenigstens einen Widerstandsheizelements mit elektrischem Strom zum Heizen, wobei
jede Versorgungseinheit (41) eine Steuereinheit zum Steuern des Stroms zum Heizen und optional einen Transformator oder Stromsteller zum Bereitstellen des Stroms zum Heizen umfasst,
**dadurch gekennzeichnet, dass** jede Versorgungseinheit (41) einen Schaltschrank aufweist und in dem Schaltschrank die jeweilige Steuereinheit zum Steuern des Stroms zum Heizen aufgenommen ist, wobei
die Steuereinheit oder ein Teil davon an einem abnehmbaren Außenwandabschnitt des Schaltschranks montiert ist und dass elektrische Verbindungen zu diesem Außenwandabschnitt als lösbare Verbindungen vorgesehen sind, um ein Austauschen dieses Außenwandabschnitts einschließlich der darauf montierten Elemente gegen einen anderen Außenwandabschnitt zu vereinfachen.

2. Rotorblattform (1) nach Anspruch 1, **dadurch gekennzeichnet, dass** in dem Schaltschrank ein Transformator oder Stromsteller zum Bereitstellen des Stroms zum Heizen aufgenommen ist.

3. Rotorblattform (1) nach einem der vorstehenden Ansprüche, **gekennzeichnet durch** eine Zentralsteuerung zum Ausgeben von Sollwerten und/oder Schaltbefehlen an jede der Versorgungseinheiten bzw. die Steuereinheit jeder Versorgungseinheit (41), wobei eine Datenverbindung zwischen der Zentralsteuerung und jeder Versorgungseinheit (41) und/oder zwischen den Versorgungseinheiten untereinander vorgesehen ist.

4. Rotorblattform (1) nach einem der vorstehenden Ansprüche, **dadurch gekennzeichnet, dass** das wenigstens eine Widerstandsheizelement als flächiges Heizelement ausgebildet ist und/oder Kohlenstofffasern oder Kohlenstofffilamente aufweist.

5. Rotorblattform (1) nach einem der vorstehenden Ansprüche, **gekennzeichnet durch** einen Tragabschnitt, insbesondere einen Gitterträger, zum Tragen des beheizbaren Formabschnitts, und eine an dem Tragabschnitt angeordnete, die Versorgungseinheiten (41) verbindende Stromschiene (42) zum Versorgen der Versorgungseinheiten bzw. der Transformatoren mit elektrischem Strom und/oder Daten.

6. Rotorblattform (1) nach einem der vorstehenden Ansprüche, **dadurch gekennzeichnet, dass** jeder Heizbereich wenigstens einen Temperatursensor aufweist und der Temperatursensor zum Übertragen gemessener Temperaturmesswerte mit der betreffenden Versorgungseinheit (41) verbunden ist und die Versorgungseinheit (41) zum Auswerten der jeweiligen Messwerte vorbereitet ist.

7. Rotorblattform nach einem der vorstehenden Ansprüche, wobei jedes Widerstandsheizelement als flächiges Heizelement ausgebildet ist und Kohlenstofffasern oder Kohlenstofffilamente aufweist.

8. Rotorblattform (1) nach einem der vorstehenden Ansprüche **gekennzeichnet durch** eine Verbindungsvorrichtung (700) zum Verbinden mit einer Gegenverbindungsvorrichtung zum Herstellen einer elektrischen Energieverbindung zum Übertragen elektrischer Energie, einer Datenübertragungsverbindung zum Übertragen von Daten, einer Druckluftverbindung zum Versorgen der Formheizung mit Druckluft und einer Vakuumübertragungsverbindung zum Bereitstellen eines Vakuums an wenigstens einem Abschnitt der Rotorblattform.

9. Verfahren zum Herstellen eines Rotorblatts einer Windenergieanlage oder eines Teils davon in einer beheizbaren Rotorblattform, umfassend die Schritte:
- Eingeben eines aushärtbaren Materials, insbesondere eines Faserverbundwerkstoffs in die Rotorblattform (1) auf eine formgebende Oberfläche eines beheizbaren Formabschnitts der Rotorblattform,
- Beheizen des beheizbaren Formabschnitts zum Aushärten und/oder Formen der Rotorblattoberfläche in dem aushärtbaren Material und
wobei der beheizbare Formabschnitt wenigstens zwei Heizabschnitte aufweist und jeder Heizabschnitt mittels wenigstens eines an oder unterhalb der formgebenden Oberfläche angeordneten elektrischen Widerstandsheizelements beheizt wird und jeder Heizabschnitt mittels einer dem jeweiligen Heizabschnitt zugeordneten Versorgungseinheit (41) zum Heizen des wenigstens einen Widerstandsheizelements mit elektrischem Strom versorgt wird und jede Versorgungseinheit (41) eine Steuereinheit zum Steuern des Stroms zum Heizen umfasst,
**dadurch gekennzeichnet, dass** eine Rotorblattform (1) nach einem der Ansprüche 1 - 8 verwendet wird.

10. Verfahren nach Anspruch 9, **dadurch gekennzeichnet, dass** jede Versorgungseinheit (41) einen Transformator oder Stromsteller zum Bereitstellen des Stroms zum Heizen umfasst.

11. Verfahren nach einem der Ansprüche 9 oder 10, **dadurch gekennzeichnet, dass** für jeden Heizabschnitt von einer Zentralsteuerung ein Temperatursollwert vorgegeben wird, der Temperatursollwert an die Versorgungseinheit (41) des jeweiligen Heizabschnitts übertragen wird und jede Versorgungseinheit (41) den ihr zugeordneten Heizabschnitt steuert, um den betreffenden Temperatursollwert auszuregeln.

12. Verfahren nach einem der Ansprüche 9-11, **dadurch gekennzeichnet, dass** für jeden Heizabschnitt von einer Zentralsteuerung ein Stromsollwert und/oder ein Schaltbefehl an die betreffende Versorgungseinheit (41) zum Steuern eines Stromes mittels eines bzw. des Transformators bzw. Stromstellers zum Beheizen des wenigstens einen Widerstandsheizelementes vorgegeben wird.

13. Verfahren nach einem der Ansprüche 9-12, **dadurch gekennzeichnet, dass** die Versorgungseinheit (41) Temperaturmesswerte an wenigstens einer Stelle in dem betreffenden Heizabschnitt aufnimmt und abhängig von einem Temperaturverlauf das Zuführen von Heizleistung unterbrochen und/oder reduziert wird.

14. Verfahren nach einem der Ansprüche 9-13, **dadurch gekennzeichnet, dass** das Beheizen abhängig von einem vorgegebenen, zeitabhängigen Temperaturverlauf gesteuert wird.

## Claims

1. Rotor blade mould (1) for producing a rotor blade of a wind turbine or a portion thereof with a heatable mould portion having a shaping surface for shaping the rotor blade surface, and wherein the heatable mould portion has at least two heating portions and each heating portion comprises at least one electrical resistance heating element which is arranged on or below the shaping surface and a supply unit (41) for supplying the at least one resistance heating element with electrical current for heating, wherein
each supply unit (41) comprises a control unit for controlling the electrical current for heating and optionally a transformer or current controller for providing the electrical current for heating,
**characterised in that** each supply unit (41) has a switch cabinet and the respective control unit for controlling the electrical current for heating is received in the switch cabinet, wherein the control unit or a portion thereof is mounted on a removable outer wall portion of the switch cabinet and **in that** electrical connections to this outer wall portion are provided as releasable connections in order to simplify a replacement of this outer wall portion including the elements which are mounted thereon with another outer wall portion.

2. Rotor blade mould (1) according to claim 1, **characterised in that** a transformer or current controller for providing the electrical current for heating is received in the switch cabinet.

3. Rotor blade mould (1) according to either of the preceding claims, **characterised by** a central control system for outputting desired values and/or switch commands to each of the supply units or the control unit of each supply unit (41), wherein a data connection is provided between the central control system and each supply unit (41) and/or between the supply units.

4. Rotor blade mould (1) according to any one of the preceding claims, **characterised in that** the at least one resistance heating element is constructed as a planar heating element and/or has carbon fibres or carbon filaments.

5. Rotor blade mould (1) according to any one of the preceding claims, **characterised by** a carrying portion, in particular a lattice carrier, for carrying the heatable mould portion, and a conductor rail (42) which is arranged on the carrying portion and which connects the supply units (41) for supplying the supply units or the transformers with electrical current and/or data.

6. Rotor blade mould (1) according to any one of the preceding claims, **characterised in that** each heating region has at least one temperature sensor and the temperature sensor is connected to the relevant supply unit (41) in order to transmit measured temperature measurement values and the supply unit (41) is provided to evaluate the respective measurement values.

7. Rotor blade mould according to any one of the preceding claims, wherein each resistance heating element is constructed as a planar heating element and has carbon fibres or carbon filaments.

8. Rotor blade mould (1) according to any one of the preceding claims, **characterised by** a connection device (700) for connecting to a counter-connection device for producing an electrical energy connection for transmitting electrical energy, a data transmission connection for transmitting data, a compressed air connection for supplying the mould heating with compressed air and a pressure reduction transmission connection for providing a reduced pressure at least at one portion of the rotor blade mould.

9. Method for producing a rotor blade of a wind turbine or a portion thereof in a heatable rotor blade mould, comprising the steps of:
- introducing a hardenable material, in particular a composite fibre material, into the rotor blade mould (1) on a shaping surface of a heatable mould portion of the rotor blade mould,
- heating the heatable mould portion in order to harden and/or shape the rotor blade surface in the hardenable material and wherein the heatable mould portion has at least two heating portions and each heating portion is heated by means of at least one electrical resistance heating element which is arranged on or below the shaping surface, and each heating portion is supplied with electrical current by means of a supply unit (41) which is associated with the respective heating portion in order to heat the at least one resistance heating element and each supply unit (41) comprises a control unit for controlling the current for heating,
**characterised in that** a rotor blade mould (1) according to any one of claims 1 to 8 is used.

10. Method according to claim 9, **characterised in that** each supply unit (41) comprises a transformer or current controller for providing the electrical current for heating.

11. Method according to either claim 9 or 10, **characterised in that**, for each heating portion, a desired temperature value is predetermined by a central control system, the desired temperature value is transmitted to the supply unit (41) of the respective heating portion and each supply unit (41) controls the heating portion which is associated therewith in order to correct the respective desired temperature value.

12. Method according to any one of claims 9 to 11, **characterised in that**, for each heating portion, a desired current value and/or a switching command is predetermined by a central control system with respect to the respective supply unit (41) in order to control an electrical current by means of a or the transformer or current controller in order to heat the at least one resistance heating element.

13. Method according to any one of claims 9 to 12, **characterised in that** the supply unit (41) receives temperature measurement values at least at one location in the respective heating portion and, in accordance with a temperature path, the supply of heating power is interrupted and/or reduced.

14. Method according to any one of claims 9 to 13, **characterised in that** the heating is controlled in accordance with a predetermined, time-dependent temperature path.

## Revendications

1. Moule de pale de rotor (1) servant à fabriquer une pale de rotor d'une éolienne ou une partie de cette dernière avec un segment de moulage pouvant être chauffé avec une surface de mise en forme servant à mouler la surface de pale de rotor et
dans lequel le segment de moulage pouvant être chauffé présente au moins deux segments de chauffage et chaque segment de chauffage comprend au moins un élément de chauffage par résistance électrique disposé en dessous de la surface de mise en forme et une unité d'alimentation (41) servant à alimenter l'au moins un élément de chauffage par résistance en courant électrique servant à chauffer, dans lequel
chaque unité d'alimentation (41) comprend une unité de commande servant à commander le courant servant à chauffer et, en option, un transformateur ou un système de réglage de courant servant à fournir le courant servant à chauffer,
**caractérisé en ce que** chaque unité d'alimentation (41) présente une armoire de distribution, et l'unité de commande respective servant à commander le courant servant à chauffer est logée dans l'armoire de distribution, dans lequel
l'unité de commande ou une partie de cette dernière est montée au niveau d'un segment de paroi extérieure, pouvant être retiré, de l'armoire de distribution, et des connexions électriques avec ledit segment de paroi extérieure sont prévues en tant que connexions amovibles afin de simplifier un remplacement dudit segment de paroi extérieure, y compris des éléments montés sur ce dernier, par un autre segment de paroi extérieure.

2. Moule de pale de rotor (1) selon la revendication 1, **caractérisé en ce qu'**un transformateur ou un système de réglage de courant servant à fournir le courant servant à chauffer est logé dans l'armoire de distribution.

3. Moule de pale de rotor (1) selon l'une quelconque des revendications précédentes, **caractérisé par** une commande centrale servant à émettre des valeurs de consigne et/ou des instructions de commutation à chacune des unités d'alimentation ou à l'unité de commande de chaque unité d'alimentation (41), dans lequel une connexion de données est prévue entre la commande centrale et chaque unité d'alimentation (41) et/ou entre les unités d'alimentation entre elles.

4. Moule de pale de rotor (1) selon l'une quelconque des revendications précédentes, **caractérisé en ce que** l'au moins un élément de chauffage par résistance est réalisé sous la forme d'un élément de chauffage plat et/ou présente des fibres de carbone ou des filaments de carbone.

5. Moule de pale de rotor (1) selon l'une quelconque des revendications précédentes, **caractérisé par** un segment de support, en particulier une poutre en treillis, servant à supporter le segment de moulage pouvant être chauffé, et par un rail conducteur (42) disposé au niveau du segment de support, connectant les unités d'alimentation (41), servant à alimenter les unités d'alimentation ou les transformateurs en courant électrique et/ou en données.

6. Moule de pale de rotor (1) selon l'une quelconque des revendications précédentes, **caractérisé en ce que** chaque zone de chauffage présente au moins un capteur de température, et le capteur de température est connecté à l'unité d'alimentation (41) concernée afin de transmettre des valeurs de température mesurées, et l'unité d'alimentation (41) est préparée afin d'évaluer les valeurs de mesure respectives.

7. Moule de pale de rotor selon l'une quelconque des revendications précédentes, dans lequel chaque élément de chauffage par résistance est réalisé sous la forme d'un élément de chauffage plat et présente des fibres de carbone ou des filaments de carbone.

8. Moule de pale de rotor (1) selon l'une quelconque des revendications précédentes, **caractérisé par** un dispositif de connexion (700) destiné à être connecté à un dispositif de connexion complémentaire servant à établir une connexion d'énergie électrique servant à transmettre de l'énergie électrique, une connexion de transmission de données servant à transmettre des données, une connexion d'air comprimé servant à alimenter le chauffage de moule en air comprimé et une connexion de transmission de vide servant à fournir un vide au niveau au moins d'un segment du moule de pale de rotor.

9. Procédé servant à fabriquer une pale de rotor d'une éolienne ou une partie de cette dernière dans un moule de pale de rotor pouvant être chauffé, comprenant les étapes suivantes consistant à :
- introduire un matériau durcissable, en particulier un matériau composite à base de fibres dans le moule de pale de rotor (1) sur une surface de mise en forme d'un segment de moule pouvant être chauffé du moule de pale de rotor,
- chauffer le segment de moule pouvant être chauffé afin de faire durcir et/ou de mouler la surface de pale de rotor dans le matériau durcissable, et
dans lequel les segments de moule pouvant être chauffés présentent au moins deux segments de chauffage et chaque segment de chauffage est chauffé au moyen au moins d'un élément de chauffage par résistance électrique disposé au niveau de ou en dessous de la surface de mise en forme et chaque segment de chauffage est alimenté en courant électrique au moyen d'une unité d'alimentation (41) associée au segment de chauffage respectif, servant à chauffer l'au moins un élément de chauffage par résistance et chaque unité d'alimentation (41) comprend une unité de commande servant à commander le courant servant à chauffer,
**caractérisé en ce qu'**un moule de pale de rotor (1) selon l'une quelconque des revendications 1 à 8 est utilisé.

10. Procédé selon la revendication 9, **caractérisé en ce que** chaque unité d'alimentation (41) comprend un transformateur ou un système de réglage de courant servant à fournir le courant servant à chauffer.

11. Procédé selon l'une quelconque des revendications 9 et 10, **caractérisé en ce qu'**une valeur de consigne de température est prédéfinie pour chaque segment de chauffage par une commande centrale, la valeur de consigne de température est transmise à l'unité d'alimentation (41) du segment de chauffage respectif, et chaque unité d'alimentation (41) commande le segment de chauffage qui lui est associé afin de réguler la valeur de consigne de température concernée.

12. Procédé selon l'une quelconque des revendications 9 à 11, **caractérisé en ce qu'**une valeur de consigne de courant et/ou une instruction de commutation à l'attention de l'unité d'alimentation (41) concernée servant à commander un courant au moyen d'un transformateur ou d'un système de réglage de courant servant à chauffer l'au moins un élément de chauffage par résistance sont prédéfinies pour chaque segment de chauffage par une commande centrale.

13. Procédé selon l'une quelconque des revendications 9 à 12, **caractérisé en ce que** l'unité d'alimentation (41) enregistre des valeurs de mesure de température au niveau au moins d'un endroit sur le segment de chauffage concerné, et l'amenée de puissance de chauffage est interrompue et/ou réduite en fonction d'une évolution de température.

14. Procédé selon l'une quelconque des revendications 9 à 13, **caractérisé en ce que** le chauffage est commandé en fonction d'une évolution de température prédéfinie, dépendant du temps.
